# EUROPÄISCHE PATENTSCHRIFT

(11) **EP 2 162 627 B1**
(45) Veröffentlichungstag und Bekanntmachung des Hinweises auf die Patenterteilung: **21.12.2011**
(21) Anmeldenummer: 08758602.0
(22) Anmeldetag: 17.05.2008
(51) Int. Cl.: F16D 13/64

(54) **REIBTEIL FÜR EINE REIBSCHLÜSSIG ARBEITENDE EINRICHTUNG**
FRICTION PART FOR A FRICTIONALLY WORKING DEVICE
ÉLÉMENT DE FRICTION DESTINÉ À UN DISPOSITIF FONCTIONNANT PAR FRICTION

(30) Priorität: 06.06.2007 DE 102007026820; 04.10.2007 DE 102007047538
(43) Veröffentlichungstag der Anmeldung: 17.03.2010
(73) Patentinhaber: BorgWarner Inc., Auburn Hills, MI 48326 (US)
(72) Erfinder: FABRICIUS, Emilio, 68723 Oftersheim (DE); CONTRINO, Salvatore, 68219 Mannheim (DE)
(74) Vertreter: Leckel, Ulf
(86) Internationale Anmeldenummer: PCT/EP2008/003982
(87) Internationale Veröffentlichungsnummer: WO 2008/148461

(56) Entgegenhaltungen:
- EP-A- 0 625 647
- EP-A- 1 498 632
- EP-A- 1 731 784
- US-A- 3 534 464
- US-A1- 2001 023 803
- US-A1- 2005 109 576
- US-A1- 2005 284 721

## Beschreibung

Die vorliegende Erfindung betrifft ein Reibteil für eine reibschlüssig arbeitende Einrichtung mit einer ringförmigen Reibfläche, die einen Innenrand und einen Außenrand aufweist, wobei in der Reibfläche mindestens ein Nutensatz mit einer ersten Nut, die sich von dem Innenrand oder von dem Außenrand zu einem Verzweigungspunkt zwischen dem Innenrand und dem Außenrand erstreckt, und einer zweiten und dritten Nut, die sich jeweils von dem Verzweigungspunkt in Richtung des anderen Randes erstrecken, vorgesehen ist.

Aus dem Stand der Technik sind eine Vielzahl von Reibteilen für reibschlüssig arbeitende Einrichtungen, wie beispielsweise Lamellen für Lamellenkupplungen oder Lamellenbremsen oder Synchronringe für Synchronisierungseinrichtungen, bekannt, bei denen das Reibteil eine Reibfläche aufweist, ,in der Nuten vorgesehen sind, die ein Nutmuster ausbilden.

So beschreibt die EP 1 371 866 A1 eine Lamelle für eine nasslaufende Mehrscheibenlamellenkupplung mit einer ringförmigen Reibfläche. Die Reibfläche weist eine innere Begrenzungskante und eine äußere Begrenzungskante auf. In der Reibfläche ist mindestens eine Nut vorgesehen, die von der inneren Begrenzungskante zu der äußeren Begrenzungskante verläuft. Die Nut ist dabei in einen ersten Teilabschnitt, der ausgehend von der inneren Begrenzungskante zu einem Umlenkpunkt zwischen den Begrenzungskanten verläuft, und einen zweiten Teilabschnitt unterteilt, der ausgehend von dem Umlenkpunkt zu der äußeren Begrenzungskante verläuft, wobei der zweite Teilabschnitt in einem vorbestimmten Winkel gegenüber dem ersten Teilabschnitt abgeknickt ist. Im Betrieb kommt es an diesem Umlenkpunkt zu einer punktuellen Druckerhöhung in dem durchströmenden Kühlmittel, wie beispielsweise Öl, wodurch benachbarte Lamellen der Mehrscheibenlamellenkupplung auseinandergedrückt werden. Dies hat wiederum zur Folge, dass die außer Reibeingriff gebrachte Mehrscheibenlamellenkupplung ein reduziertes Schleppmoment hat.

Die US 5,460,255 beschreibt eine nasslaufende Reibkupplung, die eine oder mehrere Reibscheiben umfasst, auf deren Seiten ringförmige Reibflächen vorgesehen sind. Die Reibflächen werden von der Oberfläche eines Reibbelags gebildet, nämlich einem Papierreibbelag. Der Reibbelag ist dabei in mehrere Reibbelagsegmente unterteilt, die auf der Reibscheibe angeordnet bzw. befestigt sind, wobei zwischen den Reibbelagsegmenten Nuten verbleiben, die sich von einem Innenrand der Reibfläche zu einem Außenrand der Reibfläche erstrecken. Die einzelnen Reibbelagsegmente wurden zuvor von einem kontinuierlichen Streifen des Reibbelags geschnitten, so dass wenig Reibbelagabfall entstanden ist. In einer speziellen Ausführungsform der Reibscheibe kommen ausschließlich dreieckige Reibbelagsegmente zum Einsatz. Diese sind derart angeordnet, dass sich in Umfangsrichtung der Reibfläche stets eine Nut, die gegenüber einer Radialen nach vorne geneigt ist, mit einer Nut abwechselt, die gegenüber der Radialen nach hinten geneigt ist.

Ein weiteres lamellenartig ausgebildetes Reibteil für ein automatisches Getriebe o. ä. ist aus der DE 43 02 773 A1 bekannt. Das hierin offenbarte Reibteil umfasst eine ringscheibenförmige Halteplatte an der eine ringförmige Reibfläche vorgesehen ist, die von einem Innenrand einerseits und einem Außenrand andererseits begrenzt ist. In der Reibfläche sind mehrere Nutensätze vorgesehen, die jeweils eine erste Nut, die sich von dem Innenrand zu dem Außenrand erstreckt, und eine zweite Nut umfassen, die sich von einer zwischen dem Innenrand und dem Außenrand liegenden Stelle auf der ersten Nut zu dem Außenrand erstreckt. Beide Nuten sind im Hinblick auf die vorgegebene Drehrichtung des Reibteils zur Radialen schräg nach hinten geneigt, wobei die zweite Nut eine stärkere Neigung aufweist. Die derart ausgebildeten Nutensätze sollen zu einer schnellen Entfernung des Ölfilms zwischen dem Reibteil und dem zugehörigen Gegenstück im Falle der Betätigung der Kupplung führen, um schon früh einen hohen Reibungskoeffizienten zu erzielen.

Weitere Nutensätze sind aus der DE 10 2005 029 509 A1, der EP 1 731 784 A1, der US 5,858,511, der JP 04136524 A und der US 2001/0023803 A1 bekannt.

Der zuvor beschriebene Stand der Technik ist mit unterschiedlichen Nachteilen behaftet. So ist zunächst die Geschwindigkeit der Ölfilmentfernung verbesserungswürdig, um möglichst früh einen vollständigen Kraftschluss zwischen dem Reibteil und dessen Gegenstück zu erzielen. Darüber hinaus gewährleistet das bekannte Nutbild keine ausreichende Kühlung des Reibbelages bzw. der Reibfläche durch das durch die Nuten strömende Öl. Des Weiteren kann der hohe Druck des Öles dazu führen, dass der Reibbelag beschädigt wird, insbesondere wenn es sich um einen auf der Reibscheibe aufgebrachten Papierreibbelag handelt. Ein weiterer wesentlicher Nachteil der bekannten Reibteile besteht darin, dass das so genannte Schleppmoment durch das bekannte Nutmuster nicht so stark reduziert bzw. eliminiert ist. Es ist ferner zu erwähnen, dass der Einbau der bekannten Reibscheibe in eine Kupplung stets mit großer Aufmerksamkeit durchzuführen ist, da die Ausrichtung der Nuten zu der Drehrichtung stimmen muss, wodurch die Fertigung einer Kupplung aus den bekannten Reibscheiben erschwert ist.

Es ist daher eine Aufgabe der vorliegenden Erfindung, ein Reibteil für eine reibschlüssig arbeitende Einrichtung zu schaffen, das eine schnelle Ölfilmentfernung von der Reibfläche im Falle der Betätigung, eine effiziente Kühlung der Reibfläche und eine einfache Montage der Reibteils gewährleistet, wobei insbesondere ein geringes Schleppmoment sichergestellt und ein Taumeln des Reibteils unterbunden sein soll.

Diese Aufgabe wird durch die in Patentanspruch 1 angegebenen Merkmale gelöst. Vorteilhafte Ausführungsformen der Erfindung sind Gegenstand der Unteransprüche.

Das erfindungsgemäße Reibteil für eine reibschlüssig arbeitende Einrichtung weist eine ringförmige Reibfläche auf. Unter einer reibschlüssig arbeitenden Einrichtung kann beispielsweise eine Kupplung, eine Bremse oder eine Synchronisierungseinrichtung verstanden werden. Eine Kupplung kann ferner beispielsweise eine Nass- und/oder Lamellenkupplung sein, während die Bremse als Lamellenbremse ausgebildet sein kann. Die Reibfläche umfasst einen Innenrand und einen Außenrand, wobei in der Reibfläche mindestens ein Nutensatz mit einer ersten, zweiten und dritten Nut vorgesehen ist. Die erste Nut erstreckt sich von dem Innenrand oder dem Außenrand zu einem Verzweigungspunkt zwischen dem Innenrand und dem Außenrand. Im zweitgenannten Fall findet das Reibteil vorzugsweise in einer reibschlüssig arbeitenden Einrichtung Anwendung, in der das Kühlmittel innerhalb der Einrichtung von außen nach innen durch die Nuten gezwungen wird. Die zweite wie auch die dritte Nut erstreckt sich von dem Verzweigungspunkt in Richtung des anderen Randes, also in Richtung des Außenrandes oder Innenrandes. Die zweite Nut ist in die eine Umfangsrichtung und die dritte Nut in die andere Umfangsrichtung der Reibfläche gegenüber einer Radialen durch den Verzweigungspunkt geneigt. Ein solches Reibteil hat den Vorteil, dass die Montage desselben vereinfacht ist, da die zweite Nut in die eine Umfangsrichtung und die dritte Nut in die andere Umfangsrichtung geneigt ist, wodurch das Reibteil weitgehend drehrichtungsneutral ist und somit in beliebiger Orientierung in die Kupplung eingebaut werden kann. Erfindungsgemäß ist mindestens eine der zweiten und dritten Nut als Sacknut ausgebildet, während sich die andere Nut durchgehend bis zu dem anderen Rand erstreckt. Alternativ ist mindestens eine vierte Nut vorgesehen, die sich von dem Verzweigungspunkt in Richtung des anderen Randes erstreckt und als Sacknut ausgebildet ist, während sich die zweite Nut und die dritte Nut durchgehend bis zu dem anderen Rand erstrecken.

Bei einem Reibteil mit einem derart geformten Nutensatz entsteht während des Betriebes im Bereich des Verzweigungspunktes ein erhöhter Druck in dem Kühlmittel der reibschlüssig arbeitenden Einrichtung, wie beispielsweise Öl, der dazu führt, dass benachbarte Reibpartner auseinandergedrückt werden. Hierdurch ist das so genannte Schleppmoment reduziert. Die Reduzierung des Schleppmoments wird weiterhin dadurch unterstützt, dass mindestens eine der zweiten und dritten Nut oder die vierte Nut als Sacknut ausgebildet ist. Die Sacknut des Nutensatzes führt also zu einer Verringerung des Schleppmomentes, wobei dieser Vorteil überraschenderweise bei einem Reibteil bzw. einer reibschlüssig arbeitenden Reibeinrichtung besonders stark ausgeprägt ist, das/die einen Nutfüllungsgrad größer oder gleich 1 hat. Ferner wird hierdurch ein Taumeln des Reibteils verhindert. Des Weiteren erweist sich die der zweiten und dritten Nut vorgelagerte erste Nut als eine Art Druckbegrenzer, der den Druck an dem Verzweigungspunkt in einem Maße reduziert, dass die Reibbeläge, insbesondere wenn es sich um Papierreibbeläge handelt, nicht beschädigt werden oder das Öl nicht wieder auf die Reibfläche zwischen den Reibpartnern gedrückt wird. Darüber hinaus führt der Nutensatz des erfindungsgemäßen Reibteils zu einer schnellen Abführung des Ölfilmes von der Reibfläche sowie einer effektiven Kühlung derselben. Es hat sich ferner gezeigt, dass der Einsatz des erfindungsgemäßen Reibteils in einer Kupplung o. ä. zu einer Kupplung führt, die unabhängig von Ölvolumen, Druck und Temperatur ein ruckfreies bzw. harmonisches Schließen ermöglicht.

In einer weiteren bevorzugten Ausführungsform des erfindungsgemäßen Reibteils ist die vierte Nut zwischen der zweiten und dritten Nut angeordnet.

In einer weiteren bevorzugten Ausführungsform des erfindungsgemäßen Reibteils erstreckt sich die vierte Nut entlang einer Radialen durch den Verzweigungspunkt.

In einer weiteren bevorzugten Ausführungsform des erfindungsgemäßen Reibteils besteht der Nutensatz ausschließlich aus der ersten, zweiten und dritten Nut oder ausschließlich aus der ersten, zweiten, dritten und den vierten Nuten.

In einer weiteren bevorzugten Ausführungsform des erfindungsgemäßen Reibteils sind die erste, zweite und dritte Nut in dem Verzweigungspunkt endend zusammengeführt. Sofern eine oder mehrere vierte Nuten vorgesehen sind, sind alternativ die erste, zweite, dritte sowie die vierten Nuten in dem Verzweigungspunkt endend zusammengeführt.

Gemäß einer weiteren bevorzugten Ausführungsform des erfindungsgemäßen Reibteils weist der Nutensatz an dem Innenrand oder Außenrand lediglich eine randseitige Öffnung und an dem anderen Rand - also dem Innenrand bzw. dem Außenrand - mindestens eine randseitige Öffnung auf.

In einer vorteilhaften Ausführungsform des erfindungsgemäßen Reibteils weist der Nutensatz an dem anderen Rand maximal zwei randseitige Öffnungen auf. So könnten beispielsweise die beiden Austrittsöffnungen der zweiten und dritten Nut des Nutensatzes die randseitigen Öffnungen an dem anderen Rand ausbilden.

In einer besonders vorteilhaften Ausführungsform des erfindungsgemäßen Reibteils weist die als Sacknut ausgebildete Nut - also die zweite, dritte und/oder vierte Nut des Nutensatzes - einen dem Verzweigungspunkt zugewandten ersten Abschnitt auf, der in einen Endabschnitt der Sacknut mündet, wobei der Endabschnitt gegenüber dem ersten Abschnitt aufgeweitet ist. Im Bereich des aufgeweiteten Endabschnitts weist die Sacknut somit einen vergrößerten Nutquerschnitt auf, der eine besonders starke Reduzierung des Schleppmomentes bewirkt.

Um das Schleppmoment besonders stark reduzieren zu können, ist der Endabschnitt der Sacknut in einer weiteren besonders bevorzugten Ausführungsform des erfindungsgemäßen Reibteils in der Draufsicht kreisförmig, vorzugsweise tropfenförmig ausgebildet.

In einer weiteren bevorzugten Ausführungsform des erfindungsgemäßen Reibteils erstreckt sich die erste Nut von dem Innenrand zu dem Verzweigungspunkt. Dies macht die erfindungsgemäßen Reibteile für den Einsatz in einer reibschlüssig arbeitenden Einrichtung vorteilhaft, bei denen das Kühlmittel, wie beispielsweise Öl, von innen radial nach außen durch die Nuten getrieben wird.

In einer weiteren bevorzugten Ausführungsform des erfindungsgemäßen Reibteils ist der Nutensatz oder die erste, zweite und dritte Nut zusammen Y-förmig, vorzugsweise ausschließlich Y-förmig ausgebildet. Der Nutensatz gemäß dieser Ausführungsform des Reibteils betrifft demzufolge keine erste Nut, die in eine Ringnut mündet, da die o. g. Vorteile, wie insbesondere die effektive Kühlung und die schnelle Ölfilmbeseitigung, nicht in dem Maße erzielt werden könnten.

Um die eingangs erwähnte Drehrichtungsunabhängigkeit weitgehend zu verwirklichen, erstreckt sich die erste Nut in einer weiteren bevorzugten Ausführungsform des erfindungsgemäßen Reibteils entlang der Radialen, die sich durch den Verzweigungspunkt erstreckt. Dabei ist die erste Nut vorzugsweise geradlinig ausgebildet.

Um eine besonders schnelle Abfuhr des Ölfilms von der Reibfläche und eine effektive Kühlung derselben zu verwirklichen, ist in einer besonders bevorzugten Ausführungsform des erfindungsgemäßen Reibteils zwischen der zweiten und dritten Nut ein Verzweigungswinkel kleiner als 180° ausgebildet. Unter dem Verzweigungswinkel ist hierbei derjenige Winkel zwischen der zweiten und dritten Nut zu verstehen, der zwischen den der ersten Nut abgewandten Seiten der zweiten und dritten Nut ausgebildet ist.

Als ein Reibteil mit besonders guter Kühlung der Reibfläche und schneller Abfuhr des Ölfilms hat sich eine weitere bevorzugte Ausführungsform der Erfindung erwiesen, bei der der Verzweigungswinkel zwischen 76° und 86°, vorzugsweise 81°, beträgt.

In einer vorteilhaften Ausführungsform des erfindungsgemäßen Reibteils entspricht der Neigungswinkel der zweiten Nut gegenüber der Radialen, die sich durch den Verzweigungspunkt erstreckt, dem Neigungswinkel der dritten Nut gegenüber dieser Radialen. Durch dieses weitere Merkmal kann eine annähernd vollständige Drehrichtungsneutralität des Reibteils erreicht werden, was die Montage des Reibteils innerhalb der Einrichtung erheblich erleichtert.

Gemäß einer weiteren vorteilhaften Ausführungsform des erfindungsgemäßen Reibteils weist die zweite Nut und/oder die dritte Nut eine Austrittsöffnung auf, die sich je nach Orientierung des Nutensatzes an dem Außenrand oder Innenrand befindet.

In einer bevorzugten Ausführungsform des erfindungsgemäßen Reibteils ist die eine Austrittsöffnung in der einen Umfangsrichtung und die andere Austrittsöffnung in der anderen Umfangsrichtung vor der Radialen, die sich durch den Verzweigungspunkt erstreckt, angeordnet. Hierdurch ist unter anderem eine annähernde Drehrichtungsneutralität des Reibteils gewährleistet.

In einer weiteren vorteilhaften Ausführungsform des erfindungsgemäßen Reibteils weist die erste Nut eine Eintrittsöffnung auf, die sich je nach Orientierung des Nutensatzes an dem Innenrand oder Außenrand befindet. Durch die Eintrittsöffnung kann das Kühlmittel beim Betrieb des Reibteils in die erste Nut eintreten.

Um den bereits erwähnten Druck im Bereich des Verzweigungspunktes zu erzielen, der letztlich zu einer Reduzierung des Schleppmomentes führt, ist in einer weiteren vorteilhaften Ausführungsform des erfindungsgemäßen Reibteils der kleinste Nutquerschnitt der ersten Nut größer als der kleinste Nutquerschnitt der zweiten Nut und größer als der kleinste Nutquerschnitt der dritten Nut, wobei der kleinste Nutquerschnitt der ersten Nut vorzugsweise auch größer als der kleinste Nutquerschnitt der vierten Nuten ausgebildet ist. Der Nutquerschnitt bezeichnet hierbei die Querschnittsfläche, wobei der Nutquerschnitt in einer Ebene quer zur Erstreckungsrichtung der jeweiligen Nut verläuft.

Gemäß einer weiteren besonders vorteilhaften Ausführungsform des erfindungsgemäßen Reibteils ist der kleinste Nutquerschnitt der ersten Nut größer als der größte Nutquerschnitt der zweiten Nut und größer als der größte Nutquerschnitt der dritten Nut, wobei der kleinste Nutquerschnitt der ersten Nut vorzugsweise auch größer als der größte Nutquerschnitt der vierten Nuten ausgebildet ist. Die derart größer ausgebildete erste Nut verhindert insbesondere Turbulenzen innerhalb des Nutensatzes, die zu einem Strömungsabriss führen können. Hierdurch wird eine besonders effektive Temperaturverringerung aufgrund einer langsameren Strömung innerhalb des Nutensatzes und eine somit verbesserte Wärmeaufnahme erzielt.

In einer weiteren vorteilhaften Ausführungsform des erfindungsgemäßen Reibteils ist der Nutquerschnitt der zweiten und/oder dritten Nut in Richtung der jeweiligen Austrittsöffnung konstant. Bei dieser Ausführungsform wird an den Austrittsöffnungen genannten Nuten ein geringerer Unterdruck erzeugt, als dies bei der nachstehend genannten Ausführungsform der Fall ist. Ein solches Reibteil kann daher besonders vorteilhaft in einer reibschlüssig arbeitenden Einrichtung eingesetzt werden, bei der wenig Öl verwendet wird.

Um ein Reibteil zu erhalten, bei dem die erfindungsgemäßen Vorteile besonders ausgeprägt sind, ist in einer weiteren bevorzugten Ausführungsform der Erfindung der Nutquerschnitt der zweiten und/oder dritten Nut in Richtung der jeweiligen Austrittsöffnung vergrößert. Hierdurch wird eine Diffusorwirkung innerhalb der zweiten und dritten Nut erzeugt, die einen erhöhten Staudruck am Verzweigungspunkt, eine schnelle Abfuhr des Ölfilms von der Reibfläche und eine gute Kühlung des Reibteils bewirkt.

Die vorgenannten Vorteile sind in einer weiteren bevorzugten Ausführungsform des erfindungsgemäßen Reibteils noch deutlicher ausgeprägt, bei der der Nutquerschnitt der zweiten und dritten Nut kontinuierlich, also nicht unstetig, vergrößert ist.

Um nun die Diffusorwirkung eines sich in Richtung der Austrittsöffnung vergrößernden Nutquerschnitts besonders vorteilhaft einzusetzen, ist der Nutquerschnitt der zweiten und/oder dritten Nut in einer besonders bevorzugten Ausführungsform des erfindungsgemäßen Reibteils an der jeweiligen Austrittsöffnung am größten.

In einer weiteren vorteilhaften Ausführungsform des erfindungsgemäßen Reibteils ist eine Veränderung des Nutquerschnitts der ersten, zweiten und dritten Nut, vorzugsweise auch der vierten Nuten, in Erstreckungsrichtung ausschließlich durch eine Veränderung der Nutbreite in Erstreckungsrichtung bewirkt. Dies ist aus Herstellungsgesichtspunkten von Vorteil, zumal es sich gezeigt hat, dass die Nutbreite im Gegensatz zu der Nuttiefe einfacher überwachbar bzw. überprüfbar ist.

In einer weiteren besonders bevorzugten Ausführungsform des erfindungsgemäßen Reibteils ist der Nutensatz bezogen auf die Radiale symmetrisch ausgebildet. Auf diese Weise wird eine vollständige Drehrichtungsunabhängigkeit des Reibteils erzielt, wodurch einerseits die Montage vereinfacht und andererseits auch der Einsatz in einer reibschlüssige arbeitenden Einrichtung möglich ist, bei der das Reibteil in beide Drehrichtungen drehbar sein soll.

Grundsätzlich kann die Reibfläche auch von der Oberfläche einer einstückigen Reibscheibe ausgebildet sein. In einer vorteilhaften Ausführungsform des erfindungsgemäßen Reibteils weist das Reibteil jedoch einen Belagträger und einen an dem Belagträger angeordneten Reibbelag zur Ausbildung der Reibfläche auf. Bei dem Reibbelag handelt es sich vorzugsweise um einen Papierreibbelag. Derartige Papierreibbeläge bestehen beispielsweise aus Holz- oder Baumwollfasern, Carbon- und Glasfasern, die durch Kunstharz, wie z. B. Epoxid oder Phenol, miteinander verbunden sind. Auf Grund der unabhängigen Fertigung des Reibbelages von dem Reibbelagträger und der späteren Zusammenführung, wird eine wesentlich flexiblere Herstellung der Reibteile ermöglicht.

In einer weiteren bevorzugten Ausführungsform des erfindungsgemäßen Reibteils umfasst der Reibbelag mehrere Reibbelagsegmente, die derart an dem Reibbelagträger angeordnet sind, dass die erste Nut und die zweite und/oder dritte Nut zwischen den Reibbelagsegmenten ausgebildet sind. Auf diese Weise wird bei der Herstellung des Reibbelages weniger Material verbraucht, was insbesondere bei teuren Papierreibbelägen zu hohen Kostenersparnissen führt. So wird lediglich dort Reibbelagmaterial verwendet, wo tatsächlich Reibfläche ausgebildet sein soll, wohingegen im Bereich der Nuten, deren Grund nunmehr von dem Reibbelagträger gebildet ist, auf Reibbelagmaterial verzichtet wird. Letzteres ist bei Reibbelägen, in die die Nuten eingeprägt sind, nicht der Falle. Auch führt das Einprägen der Nuten zu einer erhöhten Dicke des Reibbelages im Randbereich der Nut, was die Regelbarkeit einer reibschlüssig arbeitenden Einrichtung mit einem solchen Reibbelag erschweren würde. Bei einem Reibbelag aus Reibbelagsegmenten hingegen ist eine engere Dickenstreuung gegeben, die zu einer besseren Regelbarkeit der reibschlüssig arbeitenden Einrichtung führt. Auch kann es beim Einprägen der Nuten dazu kommen, dass die erste Nut gar nicht erzeugt wird, wenn der Innenrand des Reibbelages zu stark nach außen versetzt ist. Diese Gefahr besteht bei der erfindungsgemäßen Ausführungsform nicht, so dass auch die Fertigung vereinfacht ist.

Um zu verhindern, dass der Reibbelag während des Betriebes beschädigt wird, beispielsweise auf Grund des hohen Drucks innerhalb der Nuten, sind in einer besonders bevorzugten Ausführungsform des erfindungsgemäßen Reibteils die dem Verzweigungspunkt zugewandten Ecken der Reibbelagsegmente abgerundet, zumal die nicht abgerundeten Ecken eine geringere mechanische Stabilität gegenüber den abgerundeten Ecken aufweisen.

Um den vorgenannten Vorteil auch im Bereich der Eintritts- und Austrittsöffnungen zu erhalten, sind die den Eintritts- und/oder Austrittsöffnungen zugewandten Ecken der Reibbelagsegmente in einer weiteren vorteilhaften Ausführungsform des erfindungsgemäßen Reibteils abgerundet.

Gemäß einer weiteren bevorzugten Ausführungsform des erfindungsgemäßen Reibteils ist das Reibteil eine Lamelle für eine Lamellenkupplung oder eine Lamellenbremse.

In einer weiteren besonders bevorzugten Ausführungsform des erfindungsgemäßen Reibteils ist in der Reibfläche ferner mindestens eine weitere Sacknut vorgesehen, die sich von dem Innenrand oder dem Außenrand der Reibfläche zu einem Endpunkt zwischen dem Innenrand und dem Außenrand erstreckt. Die weitere Sacknut ist nicht mit dem Nutensatz verbunden. So kann im Betrieb beispielsweise im Bereich der an dem Außenrand vorgesehenen Sacknut ein Unterdruck entstehen, während an den Austrittsöffnungen des Nutensatzes ein Überdruck besteht. Auf diese Weise wird das Öl o. ä. aus dem Bereich der Austrittsöffnungen in den Bereich der Sacknut gesogen, wodurch eine besonders gute Kühlwirkung an dem Reibteil sowie eine verbesserte Regelbarkeit der reibschlüssig arbeitenden Einrichtung mit einem solchen Reibteil erzielt wird.

In einer weiteren vorteilhaften Ausführungsform des erfindungsgemäßen Reibteils weist die weitere Sacknut eine randseitige Öffnung, also eine Öffnung an dem Außenrand oder dem Innenrand der Reibfläche, auf, die in der einen Umfangsrichtung unmittelbar benachbart zu der einen Austrittsöffnung und in der anderen Umfangsrichtung unmittelbar benachbart zu der anderen Austrittsöffnung angeordnet ist. Unter dem Terminus "unmittelbar" ist hierbei zu verstehen, dass in den beiden Umfangsrichtungen keine weiteren Nutenöffnungen o. ä. zwischen der randseitigen Öffnung der weiteren Sacknut und den Austrittsöffnungen des Nutensatzes in dem jeweiligen Rand der Reibfläche angeordnet sind.

Gemäß einer weiteren vorteilhaften Ausführungsform des erfindungsgemäßen Reibteils ist die Sacknut in Umfangsrichtung zwischen der zweiten und dritten Nut desselben Nutensatzes angeordnet.

Die Erfindung wird im Folgenden anhand einer beispielhaften Ausführungsform unter Bezugnahme auf die beigefügten Zeichnungen näher erläutert. Es zeigen:
- Fig. 1: eine Vorderansicht einer ersten Ausführungsform des erfindungsgemäßen Reibteils,
- Fig. 2: eine vergrößerte Darstellung des Ausschnitts A von Fig. 1,
- Fig. 3: einen Querschnitt entlang der Schnittlinie B-B von Fig. 2,
- Fig. 4: einen Querschnitt entlang der Schnittlinie C-C von Fig. 2,
- Fig. 5: einen Querschnitt entlang der Schnittlinie D-D von Fig. 2,
- Fig. 6: eine vergrößerte Darstellung des Ausschnitts A von Fig. 1 bei einer zweiten Ausführungsform des erfindungsgemäßen Reibteils und
- Fig. 7: eine vergrößerte Darstellung des Ausschnitts B von Fig. 1 bei einer dritten Ausführungsform des erfindungsgemäßen Reibteils.

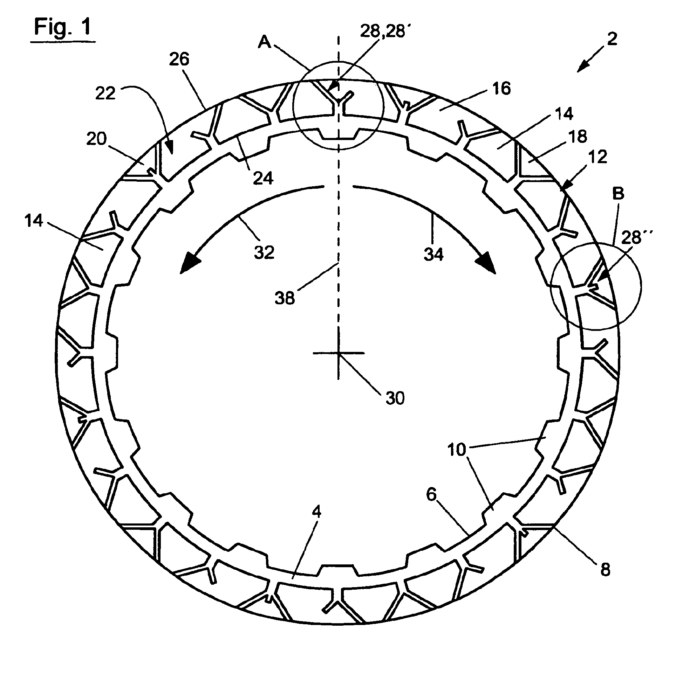

Fig. 1 zeigt eine Ausführungsform des erfindungsgemäßen Reibteils 2 für eine reibschlüssige arbeitende Einrichtung. Das gezeigte Reibteil 2 ist im vorliegenden Fall als eine Lamelle für eine Lamellenkupplung ausgebildet und weist zunächst einen Belagträger 4 auf. Der Belagträger 4 ist als eine stählerne Ringscheibe ausgebildet, die sich in der Zeichnungsebene erstreckt und einen inneren Rand 6 sowie einen äußeren Rand 8 umfasst. An dem inneren Rand 6 sind radial nach innen hervorstehende Zähne 10 vorgesehen, die einstückig mit der Ringscheibe ausgebildet und in Umfangsrichtung voneinander beabstandet angeordnet sind. Dank der Zähne 10 kann die Lamelle, bei der es sich folglich um eine so genannte Innenlamelle handelt, drehfest mit einer Welle der Kupplung verbunden werden. Es sei jedoch darauf hingewiesen, dass es sich bei dem erfindungsgemäßen Reibteil 2 ebenso um eine Außenlamelle handeln könnte, bei der die Zähne dann an dem äußeren Rand 8 angeordnet wären.

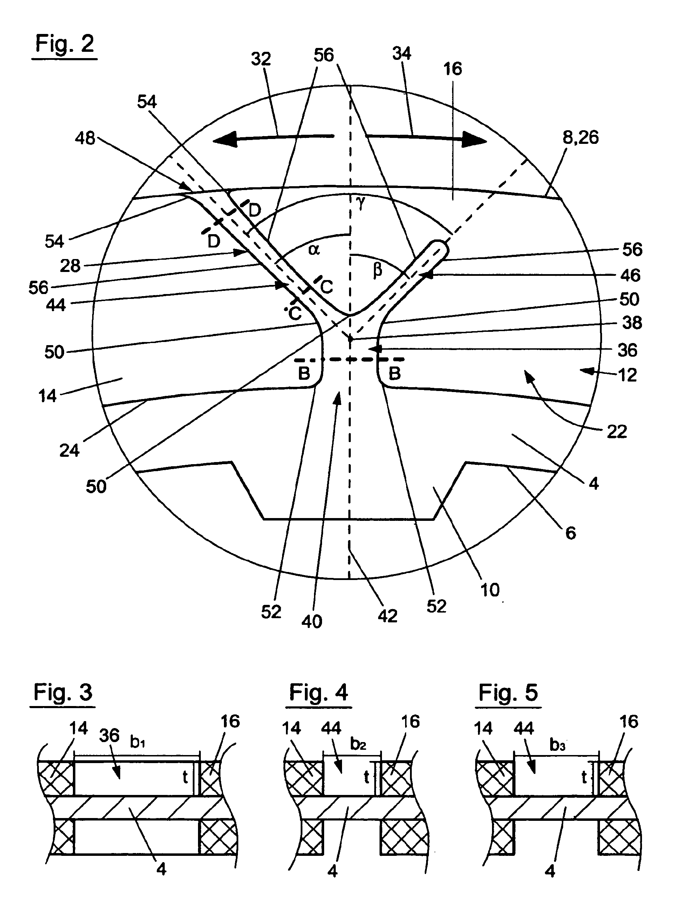

An der dem Betrachter zugewandten Vorderseite des Belagträgers 4 sowie an der dem Betrachter abgewandten Rückseite des Belagträgers 4 (Fig. 3 bis 5) ist jeweils ein Reibbelag 12 angeordnet, bei dem es sich in der dargestellten Ausführungsform um einen Papierreibbelag handelt. Der Reibbelag 12 setzt sich dabei aus mehreren Reibbelagsegmenten 14, 16, 18 und 20 zusammen, die voneinander beabstandet an der Vorder- und Rückseite des Reibbelagträgers 4 angeordnet sind. Die dem Reibbelagträger 4 abgewandte Seite des Reibbelages 12 bzw. der einzelnen Reibbelagsegmente 14, 16, 18, 20 bilden die Reibfläche 22 aus. Die Reibbelagsegmente 14, 16, 18, 20 sind dabei derart angeordnet, dass eine im Wesentlichen ringförmige Reibfläche 22 ausgebildet ist. Die ringförmige Reibfläche 22 weist einen Innenrand 24, der in radialer Richtung weiter außen als der innere Rand 6 des Reibbelagträgers 4 angeordnet ist, und einen Außenrand 26 auf, der dem äußeren Rand 8 des Reibbelagträgers 4 entspricht, d. h. bei der dargestellten Ausführungsform reicht der Reibbelag 12 bis an den äußeren Rand 8 des Reibbelagträgers 4 heran.

Die Reibbelagsegmente 14, 16, 18, 20 sind derart an dem Reibbelagträger 4 angeordnet, dass zwischen den Reibbelagsegmenten 14, 16, 18, 20 bzw. zwischen den Kanten der Reibbelagsegmente 14, 16, 18, 20 eine Vielzahl von Nuten ausgebildet ist, die mindestens einen zusammenhängenden Nutensatz 28, 28', 28" innerhalb der Reibfläche 22 ausbilden. Der besagte Nutensatz 28, 28', 28" wiederholt sich entlang der gesamten Reibfläche 22 regelmäßig, teilweise um eine Radiale gespiegelt, und wird später eingehender unter Bezugnahme auf die Fig. 2, 6 und 7 beschrieben. Das Reibteil 2 kann im Einbauzustand um eine Drehachse 30 gedreht werden, die sich senkrecht zur Ebene des Reibteiles 2 und somit senkrecht zur Zeichnungsebene erstreckt. Dabei kann das Reibteil 2 sowohl in die eine Umfangsrichtung 32 der Reibfläche 22 als auch in die andere bzw. entgegengesetzte Umfangsrichtung 34 der Reibfläche 22 gedreht werden.

Nachstehend wird beispielhaft der Aufbau eines einzelnen Nutensatzes 28 stellvertretend für die anderen Nutensätze 28 in der Reibfläche 22 unter Bezugnahme auf Fig. 2 erläutert, die den Ausschnitt A von Fig. 1 vergrößert darstellt.

Der Nutensatz 28 weist zunächst eine erste Nut 36 auf, die sich ausgehend vom Innenrand 24 der Reibfläche 22 zu einem Verzweigungspunkt 38 erstreckt. Dabei bildet die erste Nut 36 an dem Innenrand 24 der Reibfläche 22 eine radial nach innen weisende Eintrittsöffnung 40 aus. Der Verzweigungspunkt 38 ist hingegen zwischen dem Innenrand 24 und dem Außenrand 26 der Reibfläche 22, also inmitten der Reibfläche 22, angeordnet. Durch den Verzweigungspunkt 38 erstreckt sich ferner eine von der Drehachse 30 (Fig. 1) ausgehende Radiale 42 nach außen, die in den Fig. 1 und 2 gestrichelt angedeutet ist. Die erste Nut 36 erstreckt sich zwischen der Eintrittsöffnung 40 und dem Verzweigungspunkt 38 geradlinig entlang dieser Radialen 42.

Der Nutensatz 28 weist ferner eine zweite Nut 44 und eine dritte Nut 46 auf, wobei die dritte Nut 46 als Sacknut ausgebildet ist. Sowohl die zweite als auch die dritte Nut 44, 46 erstrecken sich ausgehend von dem Verzweigungspunkt 38 in Richtung des anderen Randes, nämlich in Richtung des Außenrandes 26 der Reibfläche 22, wobei jedoch nur die zweite Nut 44durchgehend ausgebildet ist und eine Austrittsöffnung 48 ausbildet. Die zweite Nut 44 ist dabei um einen Neigungswinkel α in die eine Umfangsrichtung 32 der Reibfläche 22 gegenüber der Radialen 42 durch den Verzweigungspunkt 38 geneigt, während die dritte Nut 46 um einen Neigungswinkel β in die andere bzw. entgegengesetzte Umfangsrichtung 34 der Reibfläche 22 gegenüber der Radialen 42 durch den Verzweigungspunkt 38 geneigt ist. In der dargestellten Ausführungsform sind die Neigungswinkel α und β identisch bzw. gleich groß, wobei die Nuten 44, 46 - wie bereits erwähnt - lediglich in entgegengesetzte Richtungen gegenüber der Radialen 42 geneigt sind. Der Verlauf der zweiten Nut 44 ist dabei derart gewählt, dass die Austrittsöffnung 48 in der einen Umfangsrichtung 32 vor der Radialen 42 angeordnet ist. Beide Nuten 44, 46 haben einen im Wesentlichen geradlinigen Verlauf.

Zwischen der zweiten und dritten Nut 44, 46 ist auf der der ersten Nut 36 abgewandten Seite ferner ein Verzweigungswinkel γ ausgebildet, der letztlich der Summe aus den Neigungswinkeln α und β entspricht. Dieser Verzweigungswinkel γ beträgt in der dargestellten Ausführungsform 81°. Grundsätzlich sollte der Verzweigungswinkel γ kleiner als 180° sein und vorteilhafterweise zwischen 76° und 86° betragen.

Um eine Beschädigung der Reibbelagsegmente 14, 16 im Bereich des Verzweigungspunktes 38 während des Betriebes der reibschlüssig arbeitenden Einrichtung zu verhindern, sind die dem Verzweigungspunkt 38 zugewandten Ecken 50 der Reibbelagsegmente 14, 16 abgerundet. Des Weiteren sind die der Eintrittsöffnung 40 zugewandten Ecken 52 der Reibbelagsegmente 14, 16 abgerundet. Darüber hinaus sind weiterhin die der Austrittsöffnung 48 zugewandten Ecken 54 der Reibbelagsegmente 14, 16 abgerundet.

Nachstehend wird der weitere Aufbau der einzelnen Nuten 36, 44, 46 des Nutensatzes 28 unter Bezugnahme auf die Fig. 2 bis 5 erläutert, wobei der Aufbau der zweiten und dritten Nut 44, 46 zunächst beispielhaft anhand der zweiten Nut 44 erläutert wird, da diese teilweise den gleichen Aufbau wie die dritte Nut 46 hat.

Der kleinste Nutquerschnitt der ersten Nut 36 ist größer als der kleinste Nutquerschnitt der zweiten bzw. dritten Nut 44 bzw. 46, wie dies aus einem Vergleich der Nutquerschnitte aus den Fig. 3 und 4 hervorgeht. Darüber hinaus ist der kleinste Nutquerschnitt der ersten Nut 36 größer als der größte Nutquerschnitt der zweiten Nut 44 und größer als der größte Nutquerschnitt der dritten Nut 46, was sich u. a. aus einem Vergleich zwischen dem kleinsten Nutquerschnitt der ersten Nut 36 in Fig. 3 mit dem Nutquerschnitt der zweiten Nut 44 im Bereich der Austrittsöffnung 48 ergibt.

Der Nutquerschnitt der zweiten Nut 44 vergrößert sich kontinuierlich in Richtung der Austrittsöffnung 48 am Außenrand 26 der Reibfläche 22, so dass der Nutquerschnitt am Außenrand 26 bzw. an der Austrittsöffnung 48 am größten ist. Diese kontinuierliche Vergrößerung wird beispielsweise dadurch erreicht, dass mindestens eine Kante 56 der Reibbelagsegmente 14, 16, die die seitliche Begrenzung der zweiten Nut 40 bildet, in Richtung der zweiten Nut 40 gewölbt ist. Im vorliegenden Beispiel handelt es sich jeweils um die Kanten 56 der Reibbelagsegmente 14 und 16.

Neben der Tatsache, dass bei der gezeigten Ausführungsform sowohl Vorder- als auch Rückseite des Reibbelagträgers 4 mit einem Reibbelag 12 versehen sind, ist den Fig. 3 bis 5 weiterhin zu entnehmen, dass sich die Veränderung des Nutquerschnitts der Nuten 36, 44, 46 in Erstreckungsrichtung ausschließlich durch eine Veränderung der Nutbreite bₓ ergibt, wohingegen die Nuttiefe t durch die Stärke bzw. Dicke des Reibbelages 12 vorgegeben ist. Für die Fig. 3 bis 5 gilt b₁ > b₃ > b₂.

Bei der vorstehend beschriebenen Ausführungsform besteht der Nutensatz 28 ausschließlich aus der ersten, zweiten und dritten Nut 36, 44, 46, die in dem Verzweigungspunkt 38 endend zusammengeführt sind. Während sich die zweite Nut 44 durchgehend bis zu dem Außenrand 26 erstreckt, um dort die Austrittsöffnung 48 auszubilden, erstreckt sich die als Sacknut ausgebildete dritte Nut 46 nicht bis zu dem Außenrand 26, so dass der Nutensatz 28 an dem Innenrand 24 lediglich eine randseitige Öffnung in Form der Eintrittsöffnung 40 und eine randseitige Öffnung an dem Außenrand 26 in Form der Austrittsöffnung 48 aufweist.

Nachstehend werden weitere Merkmale sowie die Funktionsweise des Reibteils 2 bei Einsatz in einer Ausführungsform einer Nasskupplung insbesondere unter Bezugnahme auf Fig. 2 beschrieben.

Beim Betrieb der Kupplung strömt ein Kühlmittel, wie beispielsweise Öl, durch die Eintrittsöffnung 40 in die erste Nut 36 in der Reibfläche 22 und gelangt bis zu dem Verzweigungspunkt 38. Von dort aus kann das Öl weiter durch die zweite Nut 44 bis zu der Austrittsöffnung 48 strömen, wo es wieder aus dem Nutensatz 28 austritt. Das in die dritte Nut bzw. Sacknut 46 strömende Öl verursacht hingegen einen Staudruck in der dritten Nut 46, der einem Taumeln des Reibteils 2 und einem Schleppmoment entgegenwirkt.

Unter anderem dank der Vergrößerung des Nutquerschnitts der zweiten Nut 44 in Richtung der Austrittsöffnung 48 wird eine Diffusorwirkung erzielt, die einen höheren Druck am Verzweigungspunkt 38 bewirkt. Ein solcher erhöhter Druck führt zu einer weiteren Reduzierung des Schleppmomentes bei nicht in Reibeingriff stehendem Reibteil. Dennoch wirkt das Vorhandensein der ersten Nut 36, die bis zu dem Verzweigungspunkt 38 führt, druckbegrenzend, so dass der angrenzende Reibbelag 12 nicht beschädigt wird. Weiterhin verhindern die abgerundeten Ecken 50 der Reibbelagsegmente 14, 16 im Bereich des Verzweigungspunktes 38 eine Beschädigung des Reibbelages 12. Im betätigten Zustand der Kupplung bewirkt das Reibteil 2 mit dem Nutensatz 28 einen schnellen Abtransport des Ölfilmes zwischen den Reibpartnern sowie eine gute Kühlung des Reibbelages 12 bzw. der Reibfläche 22.

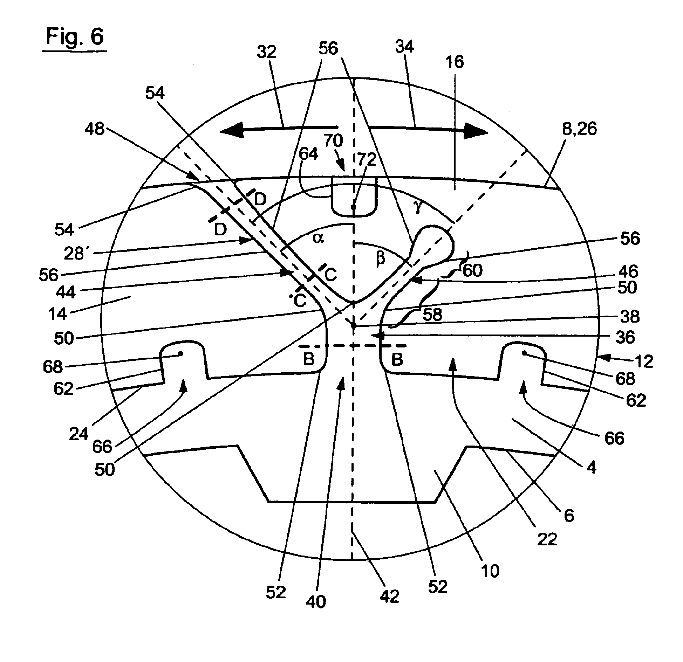

Eine zweite Ausführungsform des Nutensatzes 28' ist in Fig. 6 gezeigt, wobei die zweite Ausführungsform der ersten Ausführungsform von Fig. 2 weitgehend gleicht, so dass nachstehend lediglich die Unterschiede beschrieben werden. Es werden gleiche Bezugszeichen für gleiche oder ähnliche Teile verwendet, so dass diesbezüglich die obige Beschreibung zu den Fig. 1 bis 5 entsprechend gilt.

In der zweiten Ausführungsform des Nutensatzes 28' weist die als Sacknut ausgebildete dritte Nut 46 einen ersten Abschnitt 58 auf, der dem Verzweigungspunkt 38 des Nutensatzes 28' zugewandt ist, d. h. der erste Abschnitt 58 mündet im Bereich des Verzweigungspunktes 38 in die erste und zweite Nut 36, 44. Die als Sacknut ausgebildete dritte Nut 46 weist ferner einen Endabschnitt 60 auf, wobei der erste Abschnitt 58 mit seinem dem Verzweigungspunkt 38 abgewandten Ende in den Endabschnitt 60 mündet. Der Endabschnitt 60 ist gegenüber dem ersten Abschnitt 58 aufgeweitet, so dass in dem Endabschnitt 60 der dritten Nut 46 ein größerer Nutquerschnitt als in dem ersten Abschnitt 58 gegeben ist. Im vorliegenden Beispiel wird dies über eine größere Breite der dritten Nut 46 in dem Endabschnitt 60 bewirkt. Es gilt jedoch auch für den Endabschnitt 60, dass der kleinste Nutquerschnitt der ersten Nut 36 größer als der größte Nutquerschnitt der dritten Nut 46 ausgebildet ist. Bei der dargestellten Ausführungsform ist der Endabschnitt 60 in der Draufsicht von Fig. 6 in vorteilhafter Weise tropfenförmig ausgebildet, jedoch sind auch andere Formen, wie beispielsweise eine Kreisform, möglich.

In der Reibfläche 22 des Reibteils 2 in der zweiten Ausführungsform sind neben den Nutensätzen 28' weitere Sacknuten vorgesehen, nämlich erste Sacknuten 62 und zweite Sacknuten 64, die nicht mit dem Nutensätzen 28' verbunden sind. Die ersten Sacknuten 62 sind in den Reibbelagsegmenten 14, 16 vorgesehen und erstrecken sich von einer ersten randseitigen Öffnung 66 an dem Innenrand 24 zu einem ersten Endpunkt 68 zwischen dem Innenrand 24 und dem Außenrand 26 der Reibfläche 22. Die zweiten Sacknuten 64 sind in den Reibbelagsegmenten 14, 16, 18, 20 vorgesehen und erstrecken sich von einer zweiten randseitigen Öffnung 70 an dem Außenrand 26 zu einem zweiten Endpunkt 72 zwischen dem Außenrand 26 und dem Innenrand 24 der Reibfläche 22.

Die erste randseitige Öffnung 66 ist in der einen Umfangsrichtung 32 unmittelbar benachbart zu der Eintrittsöffnung 40 des Nutensatzes 28' und in der anderen Umfangsrichtung 34 unmittelbar benachbart zu der Eintrittsöffnung 40 eines anderen Nutensatzes 28" (siehe Fig. 1) angeordnet. Die zweite randseitige Öffnung 70 der zweiten Sacknut 64 ist in der einen Umfangsrichtung 32 unmittelbar benachbart zu der Austrittsöffnung 48 der zweiten Nut 44 angeordnet.

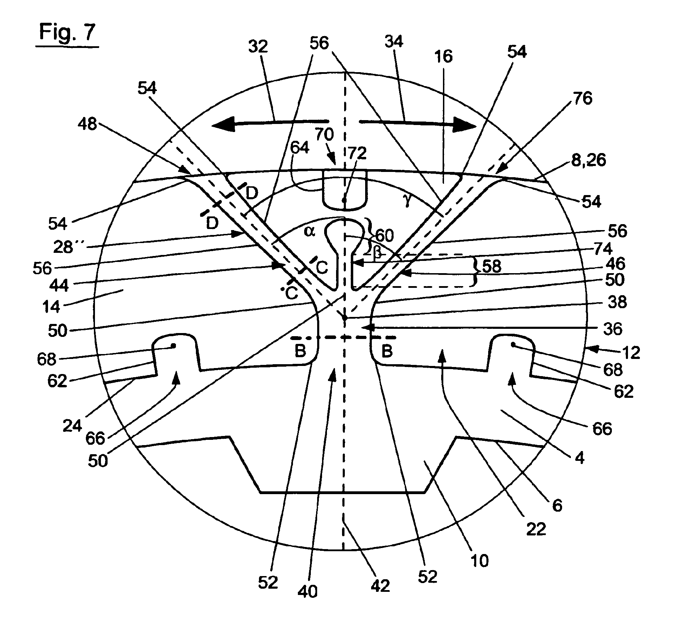

Eine dritte Ausführungsform des Nutensatzes 28" ist in Fig. 7 gezeigt, wobei die zweite Ausführungsform der ersten und zweiten Ausführungsform aus den Fig. 2 und 6 weitgehend gleicht, so dass nachstehend lediglich die Unterschiede beschrieben werden. Es werden gleiche Bezugszeichen für gleiche oder ähnliche Teile verwendet, so dass diesbezüglich die obige Beschreibung zu den Fig. 1 bis 6 entsprechend gilt.

Bei der dritten Ausführungsform ist mindestens eine vierte Nut 74 vorgesehen, die sich von dem Verzweigungspunkt 38 in Richtung des Außenrandes 26 erstreckt, jedoch als Sacknut ausgebildet ist. Im Gegensatz zu den ersten beiden Ausführungsformen erstreckt sich die dritte Nut 46 durchgehend bis zu dem Außenrand 26, um dort eine Austrittsöffnung 76 auszubilden. Die zweite und die dritte Nut 44, 46 sind bezogen auf die Radiale 42 achsensymmetrisch ausgebildet, so dass die vorangehende Beschreibung für die zweite Nut 44 entsprechend für die dritte Nut 46 gilt. Die vierte Nut 74 ist zwischen der zweiten und dritten Nut 44, 46 angeordnet und erstreckt sich entlang der Radialen 42 durch den Verzweigungspunkt 38. Wie bereits die dritte Nut aus der zweiten Ausführungsform, weist die vierte Nut 74 in der dritten Ausführungsform einen ersten Abschnitt 58 und einen zweiten Abschnitt 60 auf, die wie bereits zuvor beschrieben ausgebildet sind. So gilt insbesondere, dass der kleinste Nutquerschnitt der ersten Nut 36 größer als der größte Nutquerschnitt der vierten Nut 74 ausgebildet ist.

Die weitere zweite Sacknut 64 ist zwischen der ersten und dritten Nut 44, 46 desselben Nutensatzes 28" angeordnet, wobei die zweite randseitige Öffnung 70 in der einen Umfangsrichtung 32 unmittelbar benachbart zu der Austrittsöffnung 48 der zweiten Nut 44 und in der entgegengesetzten Umfangsrichtung 34 unmittelbar benachbart zu der Austrittsöffnung 76 der dritten Nut 46 angeordnet ist. Der gesamte Nutensatz 28" weist an dem Innenrand 24 lediglich eine randseitige Öffnung in Form der Eintrittsöffnung 40 und an dem Außenrand 26 maximal zwei randseitige Öffnungen in Form der Austrittsöffnungen 48, 76 auf.

### Bezugszeichenliste

- 2: Reibteil
- 4: Reibbelagträger
- 6: innerer Rand des Reibbelagträgers
- 8: äußerer Rand des Reibbelagträgers
- 10: Zähne
- 12: Reibbelag
- 14,16,18,20: Reibbelagsegmente
- 22: Reibfläche
- 24: Innenrand der Reibfläche
- 26: Außenrand der Reibfläche
- 28: Nutensatz (erste Ausführungsform)
- 28': Nutensatz (zweite Ausführungsform)
- 28": Nutensatz (dritte Ausführungsform)
- 30: Drehachse des Reibteils
- 32: eine Umfangsrichtung
- 34: andere/entgegengesetzte Umfangsrichtung
- 36: erste Nut
- 38: Verzweigungspunkt
- 40: Eintrittsöffnung
- 42: Radiale durch den Verzweigungspunkt
- 44: zweite Nut
- 46: dritte Nut
- 48: Austrittsöffnung
- 50,52,54: abgerundete Ecken
- 56: Kanten
- 58: erster Abschnitt
- 60: Endabschnitt
- 62: erste Sacknuten
- 64: zweite Sacknuten
- 66: erste randseitige Öffnung
- 68: erster Endpunkt
- 70: zweite randseitige Öffnung
- 72: zweiter Endpunkt
- 74: vierte Nut
- 76: Austrittsöffnung

- bₓ, b₁, b₂, b₃: Nutbreiten
- t: Nuttiefe
- α: Neigungswinkel der zweiten Nut
- β: Neigungswinkel der dritten Nut
- γ: Verzweigungswinkel

## Patentansprüche

1. Reibteil (2) für eine reibschlüssig arbeitende Einrichtung mit einer ringförmigen Reibfläche (22), die einen Innenrand (24) und einen Außenrand (26) aufweist, wobei in der Reibfläche (22) mindestens ein Nutensatz (28) mit einer ersten Nut (36), die sich von dem Innenrand (24) oder dem Außenrand (26) zu einem Verzweigungspunkt (38) zwischen dem Innenrand (24) und dem Außenrand (26) erstreckt, und einer zweiten und dritten Nut (44, 46), die sich jeweils von dem Verzweigungspunkt (38) in Richtung des anderen Randes (26, 24) erstrecken, vorgesehen ist, wobei die zweite Nut (44) in die eine Umfangsrichtung (32) und die dritte Nut (46) in die andere Umfangsrichtung (34) der Reibfläche (22) gegenüber einer Radialen (42) durch den Verzweigungspunkt (38) geneigt ist,
**dadurch gekennzeichnet,**
**dass** die zweite oder dritte Nut (44, 46) als Sacknut ausgebildet ist, während sich die andere Nut (46, 44) durchgehend bis zu dem anderen Rand (26, 24) erstreckt, oder
**dass** sich die zweite Nut (44) und die dritte Nut (46) durchgehend bis zu dem anderen Rand (26, 24) erstrecken, während mindestens eine vierte Nut (74) vorgesehen ist, die sich von dem Verzweigungspunkt (38) in Richtung des anderen Randes (26, 24) erstreckt und als Sacknut ausgebildet ist.

2. Reibteil nach Anspruch 1, **dadurch gekennzeichnet, dass** die vierte Nut (74) zwischen der zweiten und dritten Nut (44, 46) angeordnet ist, wobei sich die vierte Nut (74) vorzugsweise entlang einer Radialen (42) durch den Verzweigungspunkt (38) erstreckt.

3. Reibteil nach einem der vorangehenden Ansprüche, **dadurch gekennzeichnet, dass** der Nutensatz (28, 28', 28") ausschließlich aus der ersten, zweiten und dritten Nut (36, 44, 46) oder ausschließlich aus der ersten, zweiten, dritten und den vierten Nuten (36, 44, 46, 74) besteht.

4. Reibteil nach einem der vorangehenden Ansprüche, **dadurch gekennzeichnet, dass** die erste, zweite und dritte Nut (36, 44, 46) oder die erste, zweite, dritte sowie die vierten Nuten (36, 44, 46, 74) in dem Verzweigungspunkt (38) endend zusammengeführt sind.

5. Reibteil nach einem der vorangehenden Ansprüche, **dadurch gekennzeichnet, dass** der Nutensatz (28, 28', 28") an dem Innenrand (24) oder Außenrand (26) lediglich eine randseitige Öffnung (40) und an dem anderen Rand (26; 24) mindestens eine randseitige Öffnung (48, 76) aufweist, wobei der Nutensatz (28") an dem anderen Rand (26) vorzugsweise maximal zwei randseitige Öffnungen (48, 76) aufweist.

6. Reibteil nach einem der vorangehenden Ansprüche, **dadurch gekennzeichnet, dass** die als Sacknut ausgebildete Nut (46, 74) einen dem Verzweigungspunkt (38) zugewandten ersten Abschnitt (58) aufweist, der in einen Endabschnitt (60) der Sacknut mündet, wobei der Endabschnitt (60) gegenüber dem ersten Abschnitt (58) aufgeweitet ist, vorzugsweise in der Draufsicht kreisförmig, besonders bevorzugt tropfenförmig, ausgebildet ist.

7. Reibteil nach einem der vorangehenden Ansprüche, **dadurch gekennzeichnet, dass** der Nutensatz (28, 28') oder die erste, zweite und dritte Nut (36, 44, 46) Y-förmig, vorzugsweise ausschließlich Y-förmig ausgebildet sind.

8. Reibteil nach einem der vorangehenden Ansprüche, **dadurch gekennzeichnet, dass** sich die erste Nut (36), vorzugsweise geradlinig, entlang der Radialen (42) erstreckt.

9. Reibteil nach einem der vorangehenden Ansprüche, **dadurch gekennzeichnet, dass** zwischen der zweiten und dritten Nut (44, 46) ein Verzweigungswinkel (γ) kleiner als 180° ausgebildet ist, wobei der Verzweigungswinkel (γ) vorzugsweise zwischen 76° und 86°, besonders bevorzugt 81°, beträgt.

10. Reibteil nach einem der vorangehenden Ansprüche, **dadurch gekennzeichnet, dass** der Neigungswinkel (α) der zweiten Nut (44) gegenüber der Radialen (42) dem Neigungswinkel (β) der dritten Nut (46) gegenüber der Radialen (42) entspricht.

11. Reibteil nach einem der vorangehenden Ansprüche, **dadurch gekennzeichnet, dass** die zweite Nut (44) und/oder die dritte Nut (46) eine Austrittsöffnung (48; 76) aufweisen, wobei vorzugsweise die eine Austrittsöffnung (48) in der einen Umfangsrichtung (32) und die andere Austrittsöffnung (76) in der anderen Umfangsrichtung (34) vor der Radialen (42) angeordnet ist.

12. Reibteil nach einem der vorangehenden Ansprüche, **dadurch gekennzeichnet, dass** die erste Nut (36) eine Eintrittsöffnung (40) aufweist.

13. Reibteil nach einem der vorangehenden Ansprüche, **dadurch gekennzeichnet, dass** der kleinste Nutquerschnitt der ersten Nut (36) größer als der kleinste Nutquerschnitt der zweiten Nut (44) und größer als der kleinste Nutquerschnitt der dritten Nut (46) ist, vorzugsweise auch größer als der kleinste Nutquerschnitt der vierten Nuten (74) ist

14. Reibteil nach einem der vorangehenden Ansprüche, **dadurch gekennzeichnet, dass** der kleinste Nutquerschnitt der ersten Nut (36) größer als der größte Nutquerschnitt der zweiten Nut (44) und größer als der größte Nutquerschnitt der dritten Nut (46) ist, vorzugsweise auch größer als der größte Nutquerschnitt der vierten Nuten (74) ist.

15. Reibteil nach einem der vorangehenden Ansprüche, **dadurch gekennzeichnet, dass** der Nutquerschnitt der zweiten und/oder dritten Nut (44, 46) in Richtung der Austrittsöffnung (48, 76) konstant ist oder dass der Nutquerschnitt der zweiten und/oder dritten Nut (44, 46) in Richtung der Austrittsöffnung (48, 76), vorzugsweise kontinuierlich, vergrößert und besonders bevorzugt an der Austrittsöffnung (48, 76) am größten ist.

16. Reibteil nach einem der vorangehenden Ansprüche, **dadurch gekennzeichnet, dass** eine Veränderung des Nutquerschnitts der ersten, zweiten und dritten Nut (36, 44, 46), vorzugsweise auch der vierten Nuten (74), in Erstreckungsrichtung ausschließlich durch eine Veränderung der Nutbreite (bₓ) in Erstreckungsrichtung bewirkt ist.

17. Reibteil nach einem der vorangehenden Ansprüche, **dadurch gekennzeichnet, dass** der Nutensatz (28") bezogen auf die Radiale (42) symmetrisch ausgebildet ist.

18. Reibteil nach einem der vorangehenden Ansprüche, **dadurch gekennzeichnet, dass** das Reibteil (2) einen Belagträger (4) und einen an dem Belagträger (4) angeordneten Reibbelag (12), vorzugsweise einen Papierreibbelag, zur Ausbildung der Reibfläche (22) aufweist, wobei der Reibbelag (12) vorzugsweise mehrere Reibbelagsegmente (14, 16, 18, 20) umfasst, die derart an dem Reibbelagträger (4) angeordnet sind, dass die erste Nut (36) und die zweite und/oder dritte Nut (44, 46) zwischen den Reibbelagsegmenten (14, 16) ausgebildet sind, und besonders bevorzugt die dem Verzweigungspunkt (38) zugewandten Ecken (50) der Reibbelagsegmente (14, 16) oder/und die den Eintritts- und/oder Austrittsöffnungen (40; 48, 76) zugewandten Ecken (52; 54) der Reibbelagsegmente (14, 16, 18, 20) abgerundet sind.

19. Reibteil nach einem der vorangehenden Ansprüche, **dadurch gekennzeichnet, dass** in der Reibfläche (22) ferner mindestens eine weitere Sacknut (62, 64) vorgesehen ist, die sich von dem Innenrand (24) oder dem Außenrand (26) zu einem Endpunkt (68, 72) zwischen dem Innenrand (24) und dem Außenrand (26) erstreckt, wobei die weitere Sacknut (64) vorzugsweise eine randseitige Öffnung (70) aufweist, die in der einen Umfangsrichtung (32) unmittelbar benachbart zu der einen Austrittsöffnung (48) und in der anderen Umfangsrichtung (34) unmittelbar benachbart zu der anderen Austrittsöffnung (76) angeordnet ist und die Sacknut (66) besonders bevorzugt in Umfangsrichtung (32, 34) zwischen der zweiten und dritten Nut (44, 46) desselben Nutensatzes (28"') angeordnet ist.

## Claims

1. Friction part (2) for a frictionally operating device, having an annular friction surface (22) which has an inner edge (24) and an outer edge (26), wherein in the friction surface (22) there is provided at least one groove set (28) with a first groove (36), which extends from the inner edge (24) or the outer edge (26) to a branching point (38) between the inner edge (24) and the outer edge (26), and with a second and third groove (44, 46), which extend in each case from the branching point (38) in the direction of the other edge (26, 24), wherein the second groove (44) is inclined in one circumferential direction (32) of the friction surface (22), and the third groove (46) is inclined in the other circumferential direction (34) of the friction surface (22), with respect to a radial line (42) through the branching point (38),
**characterized**
**in that** the second or third groove (44, 46) is formed as a blind groove, while the other groove (46, 44) extends continuously to the other edge (26, 24), or
**in that** the second groove (44) and the third groove (46) extend continuously to the other edge (26, 24), while at least one fourth groove (74) is provided which extends from the branching point (38) in the direction of the other edge (26, 24) and which is formed as a blind groove.

2. Friction part according to Claim 1, **characterized in that** the fourth groove (74) is arranged between the second and third grooves (44, 46), wherein the fourth groove (74) preferably extends along a radial line (42) through the branching point (38).

3. Friction part according to one of the preceding claims, **characterized in that** the groove set (28, 28', 28") is composed exclusively of the first, second and third grooves (36, 44, 46) or exclusively of the first, second, third and fourth grooves (36, 44, 46, 74).

4. Friction part according to one of the preceding claims, **characterized in that** the first, second and third grooves (36, 44, 46) or the first, second, third and fourth grooves (36, 44, 46, 74) merge in a terminating manner at the branching point (38).

5. Friction part according to one of the preceding claims, **characterized in that** the groove set (28, 28', 28") has only one edge-side opening (40) at the inner edge (24) or the outer edge (26) and has at least one edge-side opening (48, 76) at the other edge (26; 24), wherein the groove set (28") has preferably a maximum of two edge-side openings (48, 76) at the other edge (26).

6. Friction part according to one of the preceding claims, **characterized in that** the groove (46, 74) which is formed as a blind groove has a first portion (58) which faces towards the branching point (38) and which opens into an end portion (60) of the blind groove, wherein the end portion (60) is widened relative to the first portion (58), and is preferably circular, particularly preferably droplet-shaped, in plan view.

7. Friction part according to one of the preceding claims, **characterized in that** the groove set (28, 28') or the first, second and third grooves (36, 44, 46) are formed in a Y shape, preferably exclusively in a Y shape.

8. Friction part according to one of the preceding claims, **characterized in that** the first groove (36) extends preferably rectilinearly along the radial line (42).

9. Friction part according to one of the preceding claims, **characterized in that** a branching angle (γ) of less than 180° is formed between the second and third grooves (44, 46), wherein the branching angle (γ) is preferably between 76° and 86°, and is particularly preferably 81°.

10. Friction part according to one of the preceding claims, **characterized in that** the angle of inclination (α) of the second groove (44) with respect to the radial line (42) corresponds to the angle of inclination (β) of the third groove (46) with respect to the radial line (42).

11. Friction part according to one of the preceding claims, **characterized in that** the second groove (44) and/or the third groove (46) have/has an outlet opening (48; 76), wherein preferably one outlet opening (48) is arranged in front of the radial line (42) in one circumferential direction (32), and the other outlet opening (76) is arranged in front of the radial line (42) in the other circumferential direction (34).

12. Friction part according to one of the preceding claims, **characterized in that** the first groove (36) has an inlet opening (40).

13. Friction part according to one of the preceding claims, **characterized in that** the smallest groove cross section of the first groove (36) is larger than the smallest groove cross section of the second groove (44) and larger than the smallest groove cross section of the third groove (46), preferably also larger than the smallest groove cross section of the fourth grooves (74).

14. Friction part according to one of the preceding claims, **characterized in that** the smallest groove cross section of the first groove (36) is larger than the largest groove cross section of the second groove (44) and larger than the largest groove cross section of the third groove (46), preferably also larger than the largest groove cross section of the fourth grooves (74).

15. Friction part according to one of the preceding claims, **characterized in that** the groove cross section of the second and/or third groove(s) (44, 46) is constant in the direction of the outlet opening (48, 76), or **in that** the groove cross section of the second and/or third groove(s) (44, 46) increases, preferably continuously, in the direction of the outlet opening (48, 76), and is particularly preferably at its largest at the outlet opening (48, 76).

16. Friction part according to one of the preceding claims, **characterized in that** a variation of the groove cross section of the first, second and third grooves (36, 44, 46), preferably also of the fourth grooves (74), in the direction of extent is realized exclusively by means of a variation of the groove width (bₓ) in the direction of extent.

17. Friction part according to one of the preceding claims, **characterized in that** the groove set (28") is of symmetrical design with respect to the radial line (42).

18. Friction part according to one of the preceding claims, **characterized in that** the friction part (2) has a lining carrier (4) and has arranged on the lining carrier (4) a friction lining (12), preferably a paper friction lining, for forming the friction surface (22), wherein the friction lining (12) preferably comprises a plurality of friction lining segments (14, 16, 18, 20) which are arranged on the friction lining carrier (4) such that the first groove (36) and the second and/or third groove(s) (44, 46) are/is formed between the friction lining segments (14, 16), and particularly preferably those corners (50) of the friction lining segments (14, 16) which face towards the branching point (38), and/or those corners (52; 54) of the friction lining segments (14, 16, 18, 20) which face towards the inlet and/or outlet opening(s) (40; 48, 76), are rounded.

19. Friction part according to one of the preceding claims, **characterized in that** in the friction surface (22) there is also provided at least one further blind groove (62, 64) which extends from the inner edge (24) or the outer edge (26) to an end point (68, 72) between the inner edge (24) and the outer edge (26), wherein the further blind groove (64) preferably has an edge-side opening (70) which is arranged directly adjacent to one outlet opening (48) in one circumferential direction (32) and directly adjacent to the other outlet opening (76) in the other circumferential direction (34), and the blind groove (66) is particularly preferably arranged between the second and third grooves (44, 46) of the same groove set (28") in the circumferential direction (32, 34).

## Revendications

1. Elément de friction (2) pour un dispositif fonctionnant par engagement par friction, comprenant une surface de friction annulaire (22), qui présente un bord intérieur (24) et un bord extérieur (26), au moins un ensemble de rainures (28) étant prévu dans la surface de friction (22), comprenant une première rainure (36) qui s'étend depuis le bord intérieur (24) ou le bord extérieur (26) jusqu'à un point de branchement (38) entre le bord intérieur (24) et le bord extérieur (26), et une deuxième et une troisième rainure (44, 46), qui s'étendent à chaque fois depuis le point de branchement (38) dans la direction de l'autre bord (26, 24), la deuxième rainure (44) étant inclinée dans une direction périphérique (32) et la troisième rainure (46) étant inclinée dans l'autre direction périphérique (34) de la surface de friction (22) par rapport à une radiale (42) à travers le point de branchement (38),
**caractérisé en ce que**
la deuxième ou la troisième rainure (44, 46) est réalisée sous forme de rainure borgne tandis que l'autre rainure (46, 44) s'étend en continu jusqu'à l'autre bord (26, 24), ou
**en ce que** la deuxième rainure (44) et la troisième rainure (46) s'étendent en continu jusqu'à l'autre bord (26, 24) tandis qu'au moins une quatrième rainure (74) est prévue, laquelle s'étend depuis le point de branchement (38) dans la direction de l'autre bord (26, 24) et est réalisée sous forme de rainure borgne.

2. Elément de friction selon la revendication 1, **caractérisé en ce que** la quatrième rainure (74) est disposée entre la deuxième et la troisième rainure (44, 46), la quatrième rainure (74) s'étendant de préférence le long d'une radiale (42) à travers le point de branchement (38).

3. Elément de friction selon l'une quelconque des revendications précédentes, **caractérisé en ce que** l'ensemble de rainures (28, 28', 28") se compose exclusivement de la première, deuxième et troisième rainure (36, 44, 46) ou exclusivement de la première, deuxième, troisième et quatrième rainure (36, 44, 46, 74).

4. Elément de friction selon l'une quelconque des revendications précédentes, **caractérisé en ce que** la première, deuxième et troisième rainure (36, 44, 46) ou la première, deuxième, troisième et quatrième rainure (36, 44, 46, 74) convergent en se terminant au point de branchement (38).

5. Elément de friction selon l'une quelconque des revendications précédentes, **caractérisé en ce que** l'ensemble de rainures (28, 28', 28") sur le bord intérieur (24) ou le bord extérieur (26) ne présente qu'une ouverture du côté du bord (40) et présente au moins une ouverture du côté du bord (48, 76) sur l'autre bord (26 ; 24), l'ensemble de rainures (28") présentant sur l'autre bord (26) de préférence au maximum deux ouvertures du côté du bord (48, 76).

6. Elément de friction selon l'une quelconque des revendications précédentes, **caractérisé en ce que** la rainure (46, 74) réalisée sous forme de rainure borgne présente une première portion (58) tournée vers le point de branchement (38), laquelle débouche dans une portion d'extrémité (60) de la rainure borgne, la portion d'extrémité (60) étant élargie par rapport à la première portion (58), de préférence étant réalisée en vue de dessus sous forme circulaire, particulièrement préférablement en forme de goutte.

7. Elément de friction selon l'une quelconque des revendications précédentes, **caractérisé en ce que** l'ensemble de rainures (28, 28') ou la première, deuxième et troisième rainure (36, 44, 46) sont réalisées en forme de Y, de préférence exclusivement en forme de Y.

8. Elément de friction selon l'une quelconque des revendications précédentes, **caractérisé en ce que** la première rainure (36) s'étend de préférence en ligne droite, le long de la radiale (42).

9. Elément de friction selon l'une quelconque des revendications précédentes, **caractérisé en ce qu'**entre la deuxième et la troisième rainure (44, 46) est réalisé un angle de branchement (γ) inférieur à 180°, l'angle de branchement (γ) étant de préférence compris entre 76° et 86°, particulièrement préférablement valant 81°.

10. Elément de friction selon l'une quelconque des revendications précédentes, **caractérisé en ce que** l'angle d'inclinaison (α) de la deuxième rainure (44) par rapport à la radiale (42) correspond à l'angle d'inclinaison (β) de la troisième rainure (46) par rapport à la radiale (42).

11. Elément de friction selon l'une quelconque des revendications précédentes, **caractérisé en ce que** la deuxième rainure (44) et/ou la troisième rainure (46) présentent une ouverture de sortie (48 ; 76), l'une des ouvertures de sortie (48) étant disposée de préférence dans une direction périphérique (32) et l'autre ouverture de sortie (76) étant disposée dans l'autre direction périphérique (34) avant la radiale (42).

12. Elément de friction selon l'une quelconque des revendications précédentes, **caractérisé en ce que** la première rainure (36) présente une ouverture d'entrée (40).

13. Elément de friction selon l'une quelconque des revendications précédentes, **caractérisé en ce que** la plus petite section transversale de rainure de la première rainure (36) est supérieure à la plus petite section transversale de rainure de la deuxième rainure (44) et est supérieure à la plus petite section transversale de rainure de la troisième rainure (46), de préférence est également supérieure à la plus petite section transversale de rainure de la quatrième rainure (74).

14. Elément de friction selon l'une quelconque des revendications précédentes, **caractérisé en ce que** la plus petite section transversale de rainure de la première rainure (36) est supérieure à la plus grande section transversale de rainure de la deuxième rainure (44) et est supérieure à la plus grande section transversale de rainure de la troisième rainure (46), de préférence est également supérieure à la plus grande section transversale de rainure de la quatrième rainure (74).

15. Elément de friction selon l'une quelconque des revendications précédentes, **caractérisé en ce que** la section transversale de rainure de la deuxième et/ou troisième rainure (44, 46) est constante dans la direction de l'ouverture de sortie (48, 76) ou **en ce que** la section transversale de rainure de la deuxième et/ou troisième rainure (44, 46) augmente, de préférence en continu, dans la direction de l'ouverture de sortie (48, 76), et particulièrement préférablement est la plus grande au niveau de l'ouverture de sortie (48, 76).

16. Elément de friction selon l'une quelconque des revendications précédentes, **caractérisé en ce qu'**une variation de la section transversale de rainure de la première, deuxième et troisième rainure (36, 44, 46), de préférence aussi de la quatrième rainure (74), dans la direction d'étendue, est réalisée exclusivement par une variation de la largeur de rainure (bₓ) dans la direction d'étendue.

17. Elément de friction selon l'une quelconque des revendications précédentes, **caractérisé en ce que** l'ensemble de rainure (28"), par rapport à la radiale (42), est réalisé de manière symétrique.

18. Elément de friction selon l'une quelconque des revendications précédentes, **caractérisé en ce que** l'élément de friction (2) présente un support de garniture (4) et une garniture de friction (12) disposée sur le support de garniture (4), de préférence une garniture de friction en papier, pour créer la surface de friction (22), la garniture de friction (12) comprenant de préférence plusieurs segments de garniture de friction (14, 16, 18, 20) qui sont disposés sur le support de garniture de friction (4) de telle sorte que la première rainure (36) et la deuxième et/ou troisième rainure (44, 46) soient réalisées entre les segments de garniture de friction (14, 16) et particulièrement préférablement les coins (50) des segments de garniture de friction (14, 16) tournés vers le point de branchement (38) et/ou les coins (52 ; 54) des segments de garniture de friction (14, 16, 18, 20) tournés vers les ouvertures d'entrée et/ou de sortie (40 ; 48, 76) sont arrondis.

19. Elément de friction selon l'une quelconque des revendications précédentes, **caractérisé en ce que** dans la surface de friction (22) est en outre prévue au moins une rainure borgne supplémentaire (62, 64), qui s'étend depuis le bord intérieur (24) ou le bord extérieur (26) jusqu'à un point d'extrémité (68, 72) entre le bord intérieur (24) et le bord extérieur (26), la rainure borgne supplémentaire (64) présentant de préférence une ouverture du côté du bord (70), qui est disposée dans l'une des directions périphériques (32) directement à côté de l'une des ouvertures de sortie (48), et dans l'autre direction périphérique (34) directement à côté de l'autre ouverture de sortie (76), et la rainure borgne (66) étant disposée particulièrement préférablement dans la direction périphérique (32, 34) entre la deuxième et la troisième rainure (44, 46) de ce même ensemble de rainures (28").
